# EUROPEAN PATENT SPECIFICATION

(11) **EP 0 558 743 B1**
(45) Date of publication and mention of the grant of the patent: **05.06.1996**
(21) Application number: 92921074.8
(22) Date of filing: 23.09.1992
(51) Int. Cl.: G02B 7/00, G02B 7/02

(54) **ADJUSTABLE MOUNT FOR CYLINDRICAL LENS**
JUSTIERBARE FASSUNG FÜR ZYLINDRISCHE LINSE
SUPPORT REGLABLE DE LENTILLES CYLINDRIQUES

(30) Priority: 24.09.1991 US 765161; 31.10.1991 US 785469
(43) Date of publication of application: 08.09.1993
(73) Proprietor: EASTMAN KODAK COMPANY, Rochester, New York 14650-2201 (US)
(72) Inventor: BEDZYK, Mark, David, Rochester, NY 14626 (US)
(74) Representative: Blickle, K. Werner, Dipl.-Ing.
(86) International application number: PCT/US92/08024
(87) International publication number: WO 93/06514

(56) References cited:
- EP-A- 0 179 426
- EP-A- 0 375 033
- US-A- 5 029 791

## Description

### TECHNICAL FIELD

This invention relates generally to a device for adjustably mounting an optical element in an optical system; and, in particular, to an improved device for mounting a cylindrical lens, adjustably in rotational θ_{z} and translational x or y directions, in an optical system like that of a laser printer.

### BACKGROUND ART

The positioning of a lens, mirror or similar optical element (hereafter "lens") involves spatially locating such element in six degrees of freedom. The lens is located translationally relative to each of three orthogonal axes directions generally designated as the x(scan), y(cross-scan), and z(beam path) axes directions. The lens is also located rotationally relative to three rotational directions, generally designated as the θₓ, θ_{y} and θ_{z} directions, corresponding to angular rotation, respectively, about each of the x, y and z axes.

Monolithic spherical lenses having one curved surface provide power magnification in two orthogonal directions x and y, and focus parallel rays at a focal point corresponding to the center of curvature of the lens surface. Such lenses are used in laser printers, e.g., for controlling beam spot size, convergence and focusing. Correct positioning of such spherical lenses in the x, y translational and θₓ, θ_{y} rotational directions assures alignment of the focal point and center of the lens relative to an incident beam of light coincident with the z axis. Correct location of the lens along the z-axis serves to assure proper focusing of an imaged object. Considerations for locating conjugate and composite spherical lens elements are similar.

Monolithic cylindrical lenses having one curved surface provide magnification in only one direction x or y and focus parallel rays to a line or lens cylinder axis parallel to the other direction y or x. Such lenses are used in laser printers, e.g., for beam shaping, such as for controlling x-direction or y-direction elliptical beam spot size. Cylindrical lenses may be manufactured to have a planar surface opposite the curved surface which is generally parallel to the x-y plane. Such a lens can, thus, be located in the θₓ and θ_{y} rotational directions by orienting the x-y planar surface normal to the incident beam z axis direction. Variations in positioning in the non-magnification direction (i.e. variations in the y direction for magnification in the x direction, and vice versa) are not critical. Thus, once correct orientation of the x-y planar surface is established, locational precision will be needed only in the x or y magnification translational and θ_{z} rotational directions. Location in the z direction is left adjustable for focusing purposes.

Traditional mounts for multiple degree of freedom positioning of optical elements nest multiple structural components for independent relative movement, one with respect to the other, to achieve the required translational and/or rotational positioning. U.S. Patent No. 4,652,095, for example, describes an arrangement of three nested stages, each having a table shiftable along rails in a respective x, y or z translational direction by a threaded rod movable against the force of an opposing spring. The stages are nested, with the optical element mounted for movement with the table of the first stage, the first stage mounted for movement with the table of the second stage, and the second stage mounted for movement with the table of the third stage. U.S. Patent No. 3,596,863 shows an arrangement of nested flexural pivots, each providing a respective θx; θy, or θz rotational adjustment. Other examples of nested optical element mounting arrangements are given in U.S. Patent Nos. 3,204,471; 4,077.722; 4,099,852; and 4,655,548.

Mounting arrangements that provide multiple degree of freedom lens positioning, without nesting, are shown in U.s. Patent Nos. 3,989,358 and 4,408,830. The '358 patent provides independent x and y translational adjustments by micrometer spindles that are moved against knife-edges, displaced 90° circumferentially about a lens retaining ring. The '830 patent provides x, y and x-y translational adjustments by moving inclined faces of screw-driven cradle elements against corresponding angled corners of a rectangular lens retainer.

Conventional devices for achieving six-degree of freedom positioning of optical elements tend to be unduly complex and costly. Moreover, when used for mounting cylindrical lenses in optical systems like those of laser printers or the like, the precise machining utilized to ensure correct positioning in critical directions, is wasted when applied also for non-critical ones, In general, prior art mounts seek to avoid the exertion of any torque directly on the lens itself. See, e.g., U.S. Patent No. 4,909,599.

EP-A-0 179 426 discloses a device for positioning a lens translationally with respect to three orthogonal axes x, y and z and rotationally about each of these axes. The device includes means for executing positioning of the lens in each one of these six degree of freedoms. The device includes means for applying a biasing torque to the lens in the rotational direction about the z axis and means for rotating the lens in this direction against the biasing torque.

### DISCLOSURE OF THE INVENTION

The present invention is defined in Claim 1.

It is an object of the invention to provide an improved inexpensive lens mount for positioning a cylindrical lens or similar optical element in six degrees of freedom, yet providing precise translational adjustment in the x or y axis magnification and z axis beam path directions, as well as precise rotational adjustment in the θ_{z} rotational direction.

It is another object of the invention to provide an inexpensive lens mount for the six degree of freedom positioning of a cylindrical lens, making maximum use of non-precision parts.

In accordance with the invention, a device is provided for positioning a cylindrical lens, or similar optical element, translationally with respect to x, y, z orthogonal axes directions and angularly relative to θₓ, θ_{y}, θ_{z} directions respectively rotationally about the x, y, z axes directions. The device includes means for translationally locating the lens in an x or y axis magnification direction; means for translationally locating the lens in the z axis beam-path direction; means for applying a biasing torque on the lens in the θ_{z} rotational direction; and means for rotationally locating the lens in the θ_{z} direction against the applied torque. Adjustment in the x or y magnification direction is advantageously provided by a push-pull mechanism wherein the lens is pushed in the magnification direction against the pull of an opposing restoring force.

In a first preferred embodiment, described in greater detail below, θₓ, θ_{y} positioning is achieved by abutting a planar surface, opposite a curved cylindrical surface, of the lens against a corresponding planar surface of an oversized cavity of a lens carrier. The cavity planar surface is oriented in the x-y vertical plane by other planar surfaces which contact a base rail and base by other planar surfaces formed on the carrier with x-z and y-z orientations that respectively contact horizontal and vertical planar surfaces of a railed base member. Positioning in the y or x axis non-magnification direction is achieved by other elements in the carrier cavity. Positioning in the x or y axis magnification direction is achieved by fitting planar edge surfaces of the lens in abutment with corresponding planar edge surfaces of a cavity of a lens retaining member, and utilizing a push-pull mechanism to shift the retainer in the magnification direction relative to the lens carrier. The same push-pull mechanism operates to bias the lens clockwise in the θ_{z} rotational direction about a pivot point provided in the carrier cavity. Rotational positioning in the θ_{z} direction is accomplished by moving a member into the carrier cavity into contact with the lens, to pivot the lens about the same pivot point in opposition to the biasing torque. Means for adjusting the lens in the z axis focus direction in the disclosed embodiment comprises a mechanism for locking the lens carrier in selected position along a rail directed in the z axis direction. Fasteners, threaded through aligned bores of the retainer and carrier, serve to lock the lens after making the x or y and θ_{z} adjustments. Those bores are elongated in the x or y magnification direction in the retainer to permit movement of the retainer in that direction relative to the carrier.

In a second preferred embodiment, also described below, biasing torque and magnification direction adjustment mechanisms are applied to the lens directly, rather than through the intermediary of the retainer. The lens retainer is replaced by a simple flat plate, and a spring acting in conjunction with a guide pin against a corner of the lens in the retainer cavity, biases the lens in both x or y axis and θ_{z} rotational directions against the action of x or y and θ_{z} locating pins which contact a point proximate a diagonally opposite corner of the lens. Rotational adjustment in the θ_{z} direction is accomplished by moving the θ_{z} locating pin, to pivot the lens about the guide pin in opposition to the θ_{z} biasing torque. Translational adjustment in the x or y axis magnification direction is accomplished by moving the x or y locating pin, to translate the lens between the guide pin and θ_{z} locating pin in opposition to the x or y direction biasing force. The θ_{z} biasing torque loads opposite sides of the lens against the guide pin and θ_{z} locating pin during the translational adjustment. Fasteners, threaded through aligned bores of the retainer and carrier, serve to lock the lens in position after making the x or y and θ_{z} adjustments.

The lens mount of the invention provides a device for positioning a cylindrical lens in six degrees of freedom, in an inexpensive way, utilizing precise machining only where needed. The invention takes advantage of the particular characteristics of typical rectangularly configured cylindrical lenses, to provide precise positioning in all critical directions, with the minimum of nesting.

### BRIEF DESCRIPTION OF THE DRAWINGS

Embodiments of the invention have been chosen for purposes of illustration and description, and are shown in the accompanying drawings, wherein:
FIG 1 is a schematic view of an optical system of a laser printer, employing cylindrical lens mounts in accordance with the invention;
FIG. 2 is an exploded perspective view of a first embodiment of a cylindrical lens mount of FIG. 1;
FIG. 3 is a front view of the mount of FIG. 2;
FIG. 4 is a horizontal section view taken along the line 4-4 of FIG. 3, with base omitted;
FIG. 5 is a vertical section view taken along the line 5-5 of FIG. 3, with base omitted;
FIG. 6 is a schematic view helpful in understanding the operation of the mount of FIGS. 2-5;
FIGS. 7 and 8 are perspective views, looking downstream and upstream, respectively, of modified forms of the cylindrical lens mount of FIG. 1;
FIG. 9 is an exploded perspective view of a second embodiment of a cylindrical lens mount in accordance with the invention;
FIG. 10 is a front view of the mount of FIG. 9;
FIG. 11 is another exploded perspective view of the mount of FIG. 9; and
FIG. 12 is a schematic view helpful in understanding the operation of the mount of FIGS. 9-11.

Throughout the drawings, like elements are referred to by like numerals.

### MODE OF CARRYING OUT THE INVENTION

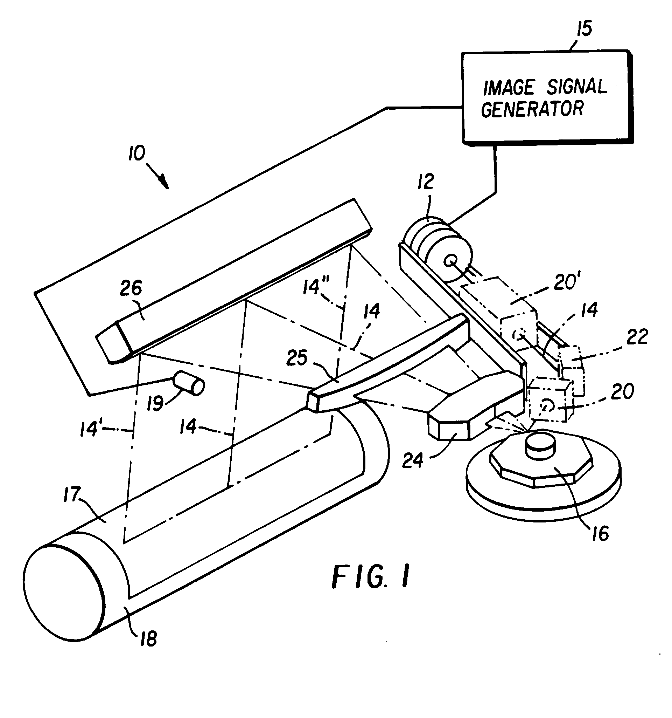

The principles of the invention are illustrated with reference to exemplary implementations of devices suitable for positioning a cylindrical lens or the like optical element translationally with respect to x, y, z orthogonal axes directions and rotationally with respect to θₓ, θ_{y}, θ_{z} directions of an optical system, such as the optical system 10 of a laser printer, shown schematically in FIG. 1.

The optical system 10 includes an optical head 12 for projecting a beam of laser light along an optical beam path 14 (dot-dashed lines) coincident with a z axis direction. The beam 14 is modulated in accordance with information received from an image signal generating circuit 15, and scanned line-by-line in an x axis (scan) direction (from 14' to 14") by means of rotating polygon 16 onto a photosensitive film or other similar receiving medium 17. The medium 17 is in turn moved in a y axis (cross-scan) direction by means of a rotating drum 18. A start-of-scan detector 19 controls the timing of the light beam modulation. Optical elements, comprising cylindrical lenses positioned by lens mounts 20, 20' and a folding mirror 22 control beam shaping, focusing and direction between the optical head 12 and the mirrored multiple facets of the polygon 16. Optical elements, comprising lenses 24, 25 and mirror 26 located between polygon 16 and drum 18, correct for differences in beam focus due to the f-θ condition and focus the image in the cross-scan direction to avoid objectionable banding artifacts due to facet out-of-plane wobble and pyramid angle errors. Additional details concerning the functioning and operation of laser printers to which the present invention has application are given in U.S. application Serial No. 637,429, entitled "Laser Printing," filed January 1, 1991, and in U.S. Patent Nos. 4,397,521; 4,796,962; 4,982,206; and 4,921,320.

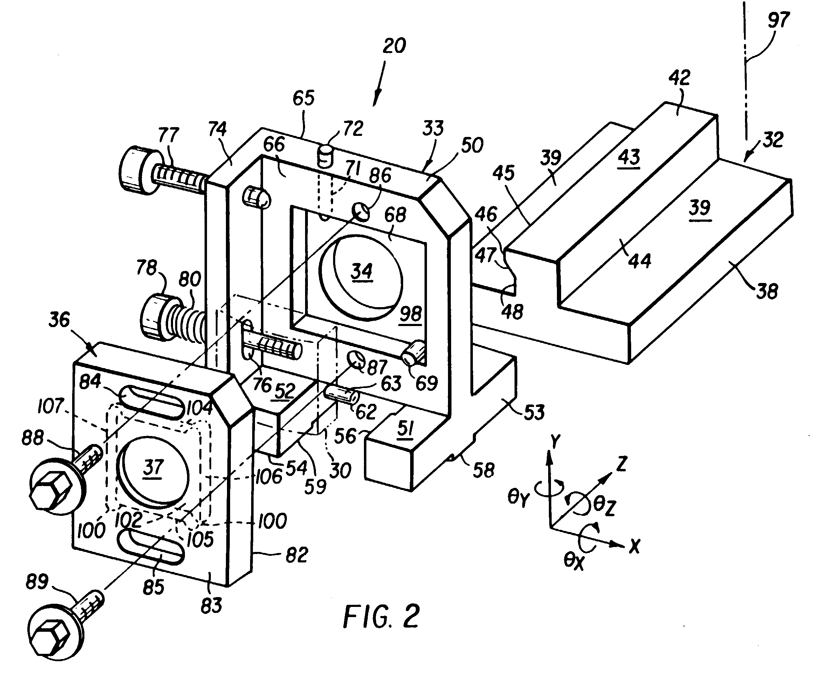

The mount 20 (FIGS. 2-5) is suitable for application, for example, to locate a cylindrical lens 30 (shown in dot-dashed lines in FIG. 2) used for shaping the elliptical form of the scanning beam 14 in either the x or y axis direction and for controlling its θ_{z} angular orientation. The illustrated lens 30 is mounted with its magnification (or curvature) direction being in the x axis direction. Those skilled in the art to which the invention relates will, however, appreciate that the same principles apply for mounting a lens having a y axis magnification direction. A modified form 20' of mount 20, discussed further below, is suitable for performing the same function with respect to a plurality of cylindrical lenses 30', 30".

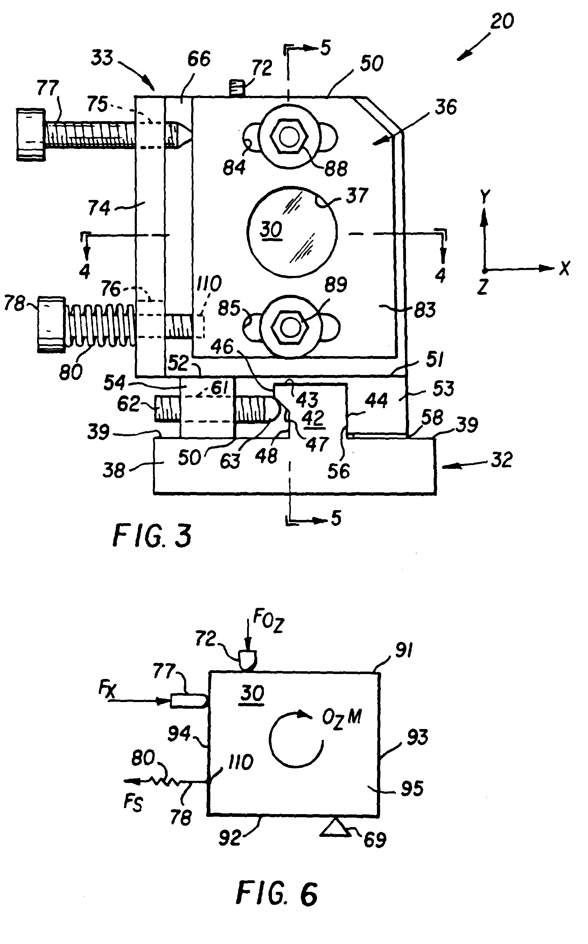

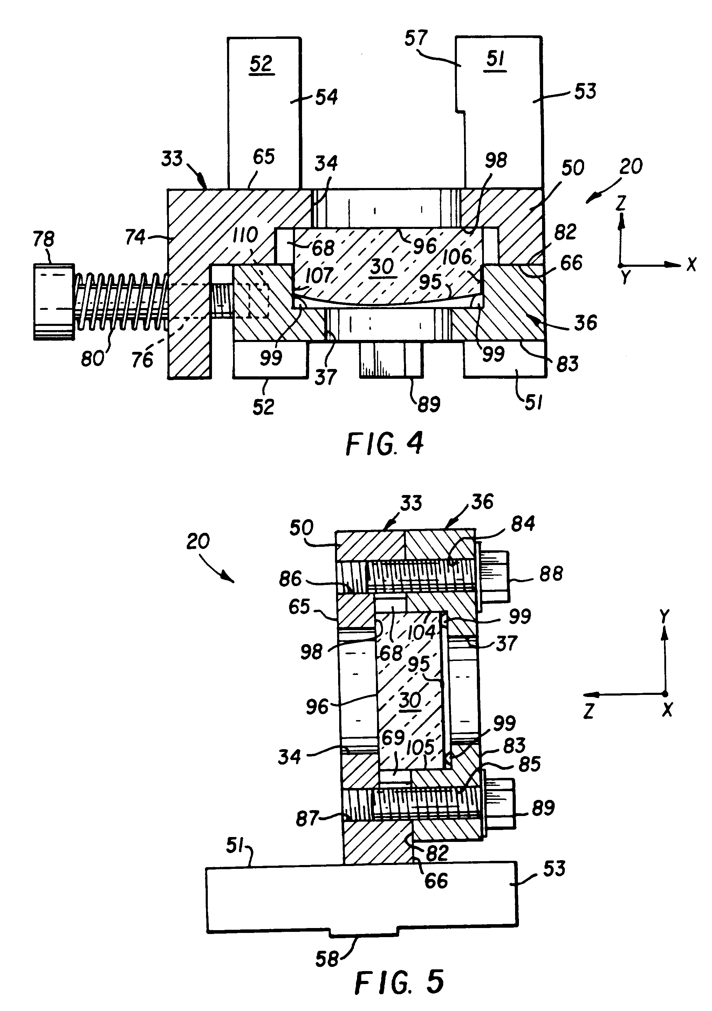

The mount 20 comprises three basic components: a base 32 elongated in the z axis direction, a lens carrier 33 including a central optical opening 34, and a lens retainer 36 including a corresponding opening 37. The base 32 (omitted for clarity from FIGS. 4 and 5) has a platform 38 which may be an integral part of a stationary structure that supports all of the components of the optical assembly. The platform 38 has a horizontal planar upper surface 39 and a rail 42 extending longitudinally in the z axis direction along the surface 39 (FIGS. 2 and 3). The rail 42 has a top surface 43, a vertical right side surface 44 extending between the surfaces 39 and 43, and a stepped left side surface 45. The surface 45 has an upper portion 46, an inwardly and downwardly directed angled portion 47 and a lower vertical portion 48. The base is machined so that surface 39 is parallel to the x-z plane and surface 44 is parallel to the y-z plane of the optical system. Rail 42 is formed to have a uniform lateral cross-section throughout its length.

The lens carrier 33 comprises a vertical rectangular portion 50 extending laterally between central points of attachment to upper surfaces 51, 52 of right and left, longitudinally extending pedestal members 53, 54. The member 53 has a rectangular lateral cross-section which is uniform, except for front and rear, leftwardly protruding rectangular pads 56 (FIGS. 2 and 3), 57 (FIG. 4) and a central downwardly protruding rectangular pad 58 (FIGS. 2, 3 and 5). The member 54 has a rectangular lateral cross-section which is likewise uniform, except for front and rear, downwardly protruding rectangular pads 59 (FIGS. 2 and 3). The undersurfaces of pads 58, 59 are planar horizontal surfaces, machined to be in the same plane parallel to the x-z plane of the optical system. The left surfaces of pads 56, 57 are planar vertical surfaces, machined to be in the same plane parallel to the y-z plane of the optical system. The left pedestal 54 includes a threaded bore 61 (dashed lines in FIG. 3), directed horizontally in the x axis direction laterally therethrough, through which a threaded adjustment screw 62 having a non-abrasive, spring-loaded plunger tip 63 is passed.

The vertical portion 50 has front and rear vertical surfaces 65, 66. A rectangular lens-receiving cavity 68 is formed in the rear surface 66 with horizontal and vertical dimensions slightly larger than the corresponding dimensions of the lens 30. Threaded bores 86, 87 extend in the z axis direction between surfaces 65, 66, in respective positions above and below the cavity 68. A locator pin or rib 69, whose function is described in greater detail below, is fixed in the lower edge surface of the cavity 68, proximate the right side, bottom corner. A threaded bore 71 (dashed lines in FIG. 2) extends vertically in the y axis direction through the top of portion 50 and opens into the upper edge surface of the cavity 68 adjacent the left side, upper corner thereof. A threaded adjustment screw 72 having a non-abrasive tip is received therein for selective advancement along the y axis direction into the cavity 68. The opening 34 is a circular opening formed concentrically parallel with the z axis.

The left side of the portion 50 includes a rectangular rearward extension 74 having upper and lower lateral bores 75, 76 (shown in dashed lines in FIG. 3) horizontally directed in the x axis direction, and through which threaded screws 77, 78 are passed. The bore 75 is threaded and sized to match the external threading on the shank of the screw 77. The tip of the screw 77 is made non-abrasive. The bore 76 (FIGS. 2-4), on the other hand, is made smooth and is elongated in the vertical y axis direction, with slight oversizing in the horizontal z axis direction. This permits free axial movement of the shank of screw 78 in the x axis direction and diagonal vertical tilting of the shank in the θ_{z} direction within the confines of bore 76. A compression spring 80 is located about the shank of the screw 78, between the left side of the extension 74 and the enlargement of the screw's head, to exert a leftwardly-directed force on the screw 78.

The lens retainer 36 is of block-like rectangular construction comprising front and rear planar vertical faces 82, 83 between which the opening 37 extends. The opening 37 is circular and formed concentrically parallel with the z axis. Bores 84, 85 also extend in the z axis direction between faces 82, 83, in respective positions above and below the opening 37. The bores 84, 85 are made smooth and elongated in the horizontal x axis direction, with slight oversizing in the y axis direction. The vertical spacing between bores 84, 85 matches the vertical spacing of the corresponding bores 86, 87 located above and below the opening 34 in the carrier 33. Screws 88, 89 are respectively passed through the bores 84, 85 and threaded into the bores 86, 87, bringing the surface 82 of retainer 36 into generally parallel alignment proximate the surface 66 of carrier 33. The threaded bores 86, 87 are sized to match the external threading of the shanks of screws 88, 89. The elongation of bores 84, 85 in the x axis direction permits movement of the retainer 36 relative to the carrier 33 in that direction, within the confines of movement of the screws 88, 89 within the bores 84, 85, when the screws 88, 89 are loosely engaged in bores 86, 87. The oversizing in the y axis direction permits limited θ_{z} movement of retainer 36 relative to carrier 33. When the screws 88, 89 are tightened down, further x axis or θ_{z} directional movement of retainer 36 relative to carrier 33 is prevented.

The lens 30 (see FIGS. 2,3, 4, 5 and 6) has upper and lower horizontal x-z planar cut edges 91, 92 and left and right vertical y-z planar cut edges 93, 94. The particular lens 30, shown for illustrative purposes, is of a convex plano construction, having a convex rear surface 95 (FIGS. 4 and 5) and an x-y planar front surface 96 (FIGS. 4 and 5). The surface 95 is cylindrically contoured to provide curvature (i.e. magnification) in the x axis direction, but uniformity (i.e. no magnification) in the y axis direction. The contour of the convex surface 95 has a cylindrical curvature centered about a lens cylindrical axis 97 indicated in FIG. 2. The lens 30 acts to provide magnification in the x axis direction only, so can be used to control the x axis direction extent of the spot size of a laser elliptical scanning beam directed along the z axis toward the lens 30. Ideally, lens 30 is shaped so that the cylindrical axis 97 of surface 95 is coincident with the midpoints of the x axis extents of the edges 91, 92 and is parallel to the y-z planes of the edges 93, 94. However, most lenses are not ideal. The mount 20 has a purpose of assuring that the lens axis of cylindrical surface 95 will be precisely aligned with the incident optical beam in the y-z plane. Slight variations in translational alignment of lens 30 in the y axis (non-magnification) direction will have little effect, since magnification occurs in the x axis direction only. Alignment in the z axis direction affects focusing only and will be adequately accommodated. Of greatest concern, therefore, are adjustments in the x axis (magnification) translational and θ_{z} rotational directions. Positioning for θ_{y} and θₓ rotation can be accomplished by assuring that the front planar surface 96 (orthogonally cut relative to the edges 91, 92, and 93, 94) is in alignment with the x-y plane of the optical system. This is done by shaping a front surface 98 of cavity 68 to be vertically planar in the x-y plane.

As shown in FIGS. 2-5, the plano surface 96 of the cylindrical lens 30 is pressured in the z axis direction against the recessed x-y planar surface 98 of the cavity 68 of lens carrier 33. This positions the lens 30 in the θx and θy rotational directions sufficiently for laser printer beam shaping applications without the need for adjustment. The pressure is provided through resilient means, such as RTV or rubber members 99 (FIG. 4) placed in enlargements 100 at the corners of a forwardly-opening cavity 102 of retainer 36 (shown in dashed lines in FIG. 2), and sandwiched between the lens retainer 36 and lens 30. The force exerted by lock screws 88, 89 serves to tightly compress the resilient members 99 between the retainer 36 and the lens 30.

The front part of lens 30 is received within cavity 68 of carrier 33, with its plano surface 96 abutting the cavity surface 98. The back part of lens 30 is received within cavity 102 of retainer 36, with the corners of the convex surface 95 pressing against the resilient members 99. Cavity 102 is sized to match the x-y plane cross-sectional configuration of lens 30, with planar edge surfaces 104, 105, 106, 107 (FIGS. 2, 4 and 5) configured to match for close abutment purposes the corresponding lens surfaces 91, 92, 93, 94 of lens 30. Retainer 36 has a leftwardly-opening x-axis directed bore 110 (FIGS. 3 and 4), into which the right end of screw 78 is threaded. The right end tip of screw 77 presses against, but does not thread into, the left side of retainer 36. The heads of screws 62, 72 and 77 can be provided with allen wrench-receiving heads for ease of turning purposes.

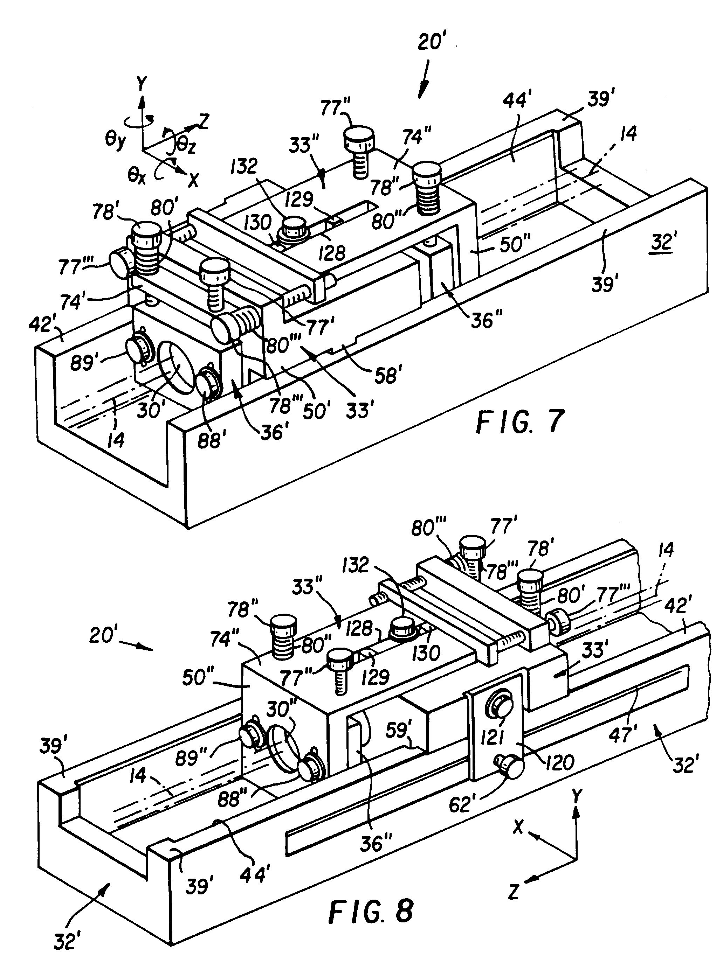

In operation, as indicated in FIG. 6, a clockwise moment θ_{z}M is applied to the lens retainer 36 by the force Fₛ of the spring 80 acting against the head of the screw 78, while the other end of the screw is attached at the bore 110 to the retainer 36. This provides a clockwise θ_{z} directed biasing torque on the lens 30 about a pivot point provided by the pin 69. The tip of screw 77 which is in contact with the left edge of the retainer 36 assists in this regard. The biasing torque forces the lens 30 also against the tip of screw 72 which, together with the tip of screw 77, supplies the forces Fₓ, F_{θ} as indicated. Adjustment of the lens 30 in the x axis (magnification) translational and θ_{z} rotational directions may be made against the biasing force of spring 80 by advancing the screw 72 and/or 77. Advancing the screw 77 in the x axis direction will move the retainer 36 and lens 30 in the x axis direction to set the x position of the lens 30, acting in a push-pull manner with the spring 80. Advancing the screw 72 in the y axis direction will move the retainer 36 and lens 30 in a counterclockwise direction about the pivot point 69, to set the θ_{z} position against the biasing torque of spring 80. Adjustment of the θ_{z} angular positioning of lens 30 is accomplished first, so that the x axis adjustment is not affected thereby. The push-pull mechanism serves to maintain the θ_{z} adjustment, while the x axis adjustment is made. Once the x axis and θ_{z} positions have both been set, the screws 88, 89 are tightened down to lock the relative positions of the retainer 36 and carrier 33. A clockwise moment is chosen to load the lens 30 against the locators 72, 77, so that standard right-hand threaded lockdown screws 88, 89 will not dislodge the lens 30 from its adjusted position during lockdown. Because the lens retainer 36 does not itself function to locate the lens, but only to apply a pressure in the z axis direction and a θ_{z} biasing torque, it can be an inexpensive non-precision part. The only parts requiring precision are the lens 30, the lens carrier 33 and the base 32.

The lens carrier 33 is provided with three horizontally planar locating pads 58, 59 on its bottom and two vertically planar pads 56, 57 on its side, as previously described. The spring-loaded plunger 63 of screw 62 provides a force which loads all five pads against corresponding features of the base 32, which are elongated in the z axis direction to allow for adjustment in that direction. The features are arranged so that the surfaces 39, 44 critical to positioning can be machined with the same milling bit in the same setup, thus improving accuracy. The x-z planar pads 58, 59 are loaded against the x-z planar horizontal base surface 39 and the y-z planar pads 56, 57 are loaded against the y-z planar vertical rail surface 44. The rail 42 is dimensioned so that its top surface 43 is not in contact with the carrier 33. Loading is accomplished by applying the spring force of the plunger end 63 of the screw 62 against the diagonal angling of the surface 47, thereby providing both x and y axis direction force components. To move the carrier 33 in the z axis direction for focusing, screw 62 is loosened to let the carrier 33 slide along the rail 42 until its desired z axis position is attained, then tightened to lock the carrier 33 in that position. The spring of plunger 63 keeps the pads loaded against the rail during such adjustment. Assuring that the surface 98 of cavity 68 is machined to be planar in the x-y plane, perpendicular to the respective x-z and y-z planar surfaces of the pads 58, 59 and pads 56, 57, assures the proper location of the lens 30 in the θₓ, θ_{y} rotational directions when the plano lens surface 96 is pressed against the surface 98.

FIGS. 7 and 8 illustrate the same principles discussed above, applied in the lens mount 20' of FIG. 1. The mount 20' makes provision for mounting two cylindrical lenses 30', 30", both of which are set with their magnifications (i.e. curvatures) in the y axis direction. As shown, one lens 30' is mounted in the cavities of a retainer 36' and a carrier 33'. Screw 77' passes through an extension 74' of carrier 33' to press against an edge of retainer 36', and screw 78' attaches by threading engagement with retainer 36' at another location of the same edge and is biased by the action of a spring 80'. A similar setup is provided for the lens 30" placed with different parts thereof in the cavities of carrier 33" and retainer 36". A screw 77" passes through an extension 74" to press against the retainer 36", and a screw 78" attaches to retainer 36" to provide biasing under the action of spring 80". Screws 88', 89' and 88", 89" provide locking in the same manner as the screws 88, 89, discussed above.

Z axis positioning of the lens 30' is provided by five point loading of three horizontally planar pads 58', 59' and two vertically planar pads (not shown) of carrier 33' against corresponding horizontally and vertically planar surfaces 39', 44' of base 32'. A depending arm 120 (FIG. 8), which attaches at a screw 121 to a side of the carrier 33', a screw 62' with a spring-loaded plunger end which presses against an angled surface 47' of a longitudinal recess in a rail portion 42' of the base 32'. The plunger end of screw 62' acting on surface 47' draws the horizontal pads 58', 59' down against the horizontal surfaces 39', and the vertical pads (not shown) out against the vertical surface 44'.

The carrier 33" and retainer 36" are carried by the carrier 33'. Provision for relative z axis directional movement of carrier 33" relative to carrier 33' is provided by screws 77"', 78"' which establish a push-pull mechanism between the members 33' and 33". Longitudinally-spaced projections 129, 130 of member 33' extend upward for travel within a longitudinal slot 128 formed within carrier 33". Slot 128 is slightly larger than the projections 129, 130 in the x axis direction. A counterclockwise push-pull θ_{y} biasing torque established by the force of spring 80"', loads opposite sides of the projections 129, 130 against opposite sides of the slot 128. A lockdown screw 132 locks the established relative z axis directional position of the carriers 33', 33" after adjustment.

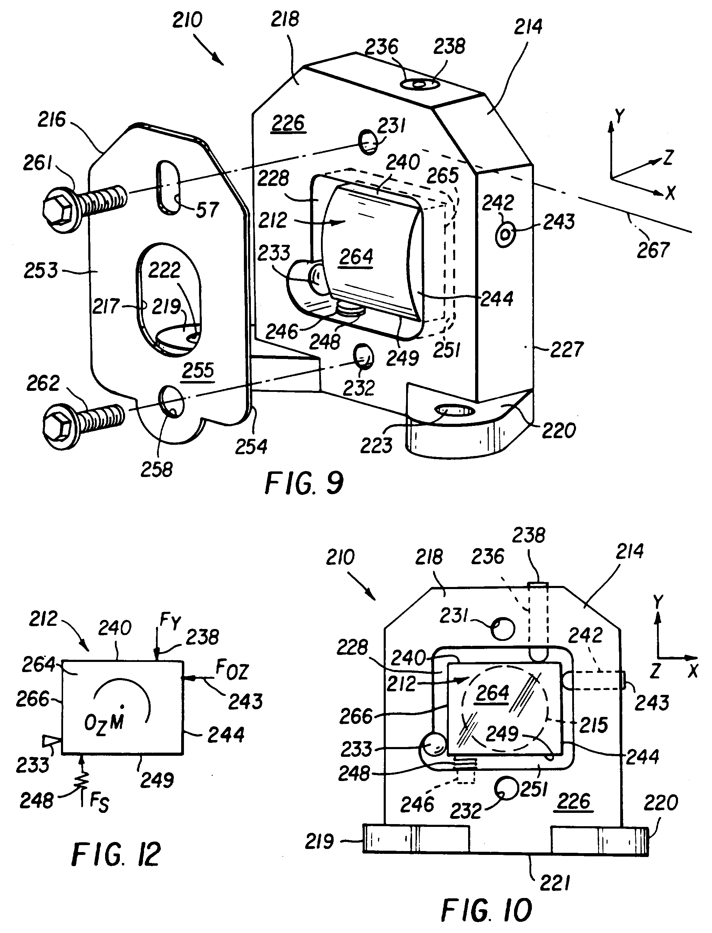

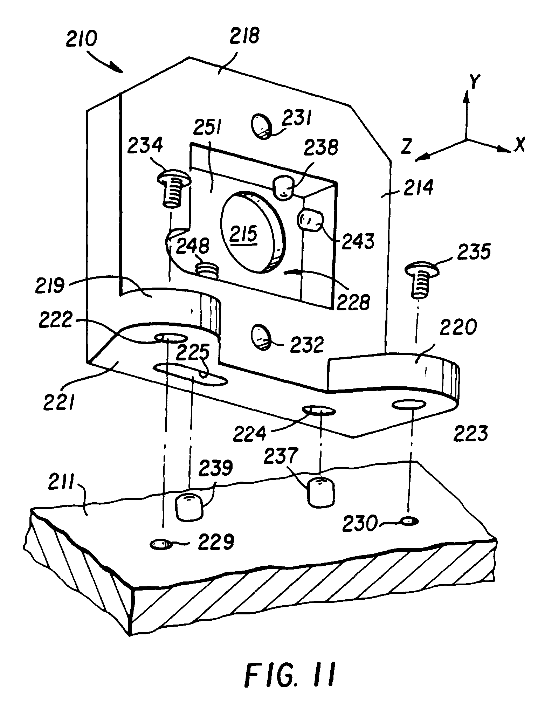

FIGS. 9-12 show a second embodiment of a lens mount 210 employing principles similar to those employed in the lens mounts 20, 20', described above. As with the embodiments 20, 20', lens positioning is achieved utilizing a lens retainer to abut a planar surface of the lens against a corresponding planar surface of an oversized cavity of a lens carrier. However, unlike the previously described arrangements wherein positioning of the lens in the x or y axis magnification and θ_{z} rotational directions is achieved indirectly by adjusting the position of the retainer relative to the carrier, in the mount 210, such adjustments are applied directly to the lens.

The mount 210 (FIGS. 9-12) is shown in a configuration suitable to locate a cylindrical lens 212 (omitted for clarity from FIG. 11) with its magnification direction in the y axis direction. Mount 210 comprises a lens carrier 214 including a central optical opening 215 (shown in dashed lines in FIG. 10 and in FIG. 11), and a lens retainer 216 including a corresponding opening 217. (The retainer 216 is omitted for clarity from FIGS. 10 and 11.) The opening 215 is a circular opening formed concentrically parallel with the z axis. The opening 217 is similarly configured, except that it is elongated in the y axis direction. The illustrated carrier 214 is configured for fixed attachment in a z axis direction position on a stationary structure 211 (FIG. 11) that supports all of the components of the optical assembly. The mount 210 may, however, alternately be configured to interact with an underlying base to provide adjustment longitudinally in the z axis direction, as done with the corresponding carrier element 33, described above.

The carrier 214 comprises a generally planar vertical portion 218 extending upwardly from a pair of outwardly-angled, forwardly extending horizontal pedestal members 219, 220. The undersurface 221 of carrier 214 lies in the x-z plane. Vertical throughbores 222, 223 in the members 219, 220 and upwardly directed blind bore 224 and slot 225 in the undersurface 221 provide means for attachment of the carrier 214 in a fixed z axis direction position on a corresponding x-z planar surface of underlying optical system structure 211 (FIG. 11). The spacing of bores 222, 223 is chosen to match the spacing of corresponding tapped hole attachment points 229, 230 on the underlying structure 211, so that threaded screws or similar fasteners 234, 235 can be tightened down through the bores 222, 223 and into holes 229, 230 to hold the lens 212 down against the x-z planar surface of structure 211. Locator pins 237, 239 project up from the structure 211, fit into the bore 224 and slot 225 of the carrier 214 and act together with surfaces 211, 221 to set the θₓ, θ_{y} rotational and z axis translational directions, as further described below. The bores 222, 223 are oversized relative to the hold down screws 234, 235. The bore 224 and slot 225, however, closely match the pins 237, 239.

The vertical portion 218 has parallel, front and rear vertical surfaces 226, 227. A generally rectangular lens-receiving cavity 228 is formed in the front surface 226, with horizontal and vertical dimensions slightly larger than the corresponding dimensions of the lens 212. Threaded bores 231, 232 extend in the z axis direction between surfaces 226, 227 in respective positions above and below the cavity 228. A guide pin or rib 233 is received, axially oriented in the z axis direction, within an enlargement in the left edge surface of the cavity 228, proximate the bottom left corner of the cavity 228. A threaded bore 236 (dashed lines in FIG. 10) extends vertically in the y axis direction through the top of portion 218 and opens into the upper edge surface of the cavity 228 adjacent the upper right corner thereof. An adjustable y-axis direction position locator, in the form of a threaded adjustment screw 238 having a non-abrasive tip, is received within bore 236 for selective movement in the y axis direction into contact with an upper edge 240 of lens 212. A threaded bore 242 (dashed lines in FIG. 10) extends horizontally in the x axis direction through the right side of portion 214 and opens into the right edge surface of cavity 228 adjacent the upper right corner thereof. An adjustable θ_{z} direction position locator, in the form of an adjustment screw 243 having a non-abrasive tip, is received within bore 242 for selective movement in the x axis direction into contact with a right edge 244 of lens 212.

A blind-ended, smooth bore 46 (dashed lines in FIG 10) extends vertically in the y axis direction from an opening onto the bottom edge surface of the cavity 228 adjacent the lower left corner thereof. A compression coil spring 248 is positioned within the bore 246 to exert an upward force Fₛ (FIG. 12) on the bottom edge 249 of lens 212 adjacent the bottom left corner thereof. The front surface 251 of cavity 228 is made planar in the x-y plane of the optical system.

The lens retainer 216 (FIG. 9) is a thin plate-like member comprising front and rear planar vertical faces 254, 255 between which the opening 217 extends. Bores 257, 258 extend in the z axis direction between faces 254, 255, in respective positions above and below the opening 217. The bores 257, 258 are smooth, and bore 257 is elongated in the vertical y axis direction. The vertical spacing between bores 257, 258 matches the vertical spacing of the corresponding bores 231, 232 located above and below the cavity 28 of the carrier 214. Screws 261, 262 (FIG. 9) are respectively passed through the bores 257, 258 and threaded into the bores 231, 232, bringing the surface 254 of retainer 216 into abutment with the curved surface 264 of lens 212. The elongation of bore 257 in the y axis direction permits the retainer 216 to wrap around the lens 212 as the screws 261, 262 are tightened, thereby pressing the plano surface 265 of lens 212 flush against the x-y planar surface 251 of the cavity 228.

The lens 212 (see FIGS. 9, 10 and 12) has upper and lower horizontal x-z planar cut edges 240, 249 and left and right vertical y-z planar cut edges 266, 244. The particular lens 212, shown for illustrative purposes, is of a convex plano construction, having a convex front surface 264 and an x-y planar rear surface 265. The surface 264 is cylindrically contoured to provide curvature (i.e. magnification) in the y axis direction, but uniformity (i.e. no magnification) in the x axis direction. The contour of the convex surface 264 has a cylindrical curvature centered about a lens cylindrical axis 267 indicated in FIG. 9. The lens 212 acts to provide magnification in the y axis direction only, so can be used to control the y axis direction extent of the spot size of a laser elliptical scanning beam directed along the z axis toward the lens 212.

Ideally, lens 212 is shaped so that the cylindrical axis 267 of surface 264 is coincident with the midpoints of the y axis extents of the edges 266, 244 and is parallel to the x-z planes of the edges 240, 249. However, most lenses are not ideal. The mount 210, therefore, has a purpose of assuring that the lens axis 267 of cylindrical surface 264 will be precisely aligned with the incident optical beam in the x-z plane. Slight variations in translational alignment of lens 212 in the x axis (non-magnification) direction will have little effect, since magnification occurs in the y axis direction only. Alignment in the z axis direction affects focusing only and will be adequately accommodated by the attachment of pedestals 219, 220 to the underlying optical system structure. Of greatest concern, therefore, are adjustments in the y axis (magnification) translational and θ_{z} rotational directions. Positioning for θ_{y} and θₓ rotation is accomplished by assuring that the plano surface 251 (orthogonally cut relative to the edges 240, 249, and 266, 244) is in alignment with the x-y plane of the optical system. This is done by shaping the inner surface 251 (FIG. 11) of cavity 228 to be vertically planar in the x-y plane, as already described.

As shown in FIGS. 9 and 10, the plano surface 265 of the cylindrical lens 212 is pressured in the z axis direction against the recessed x-y planar surface 251 of the cavity 228 of lens carrier 214. This positions the lens 212 in the θx and θy rotational directions sufficiently for laser printer beam shaping applications without the need for adjustment. The pressure is provided through resilient means, provided by tightening the thin plate-like retainer 216 about the rearwardly projecting curved surface 264 of the lens 212, using the lock screws 261, 262.

In operation, as indicated in FIG. 12, a clockwise moment θ_{z}M is applied to the lens 212 by the force Fₐ of the spring 248 acting against the surface 249 adjacent the bottom left corner of lens 212. This provides a clockwise θ_{z} directed biasing torque on the lens 212 when opposed by the tip of screw 238 which is in contact with the surface 240 at the diagonally opposite corner of lens 212. The biasing torque forces the lens 212 also against the tip of screw 243 which, together with the tip of screw 238, supplies the forces F_{y}, F_{θ} indicated. Pin 233 acts as a guide against which the lens is also urged; and spring 248, thus, also provides a biasing force in the y axis direction. Adjustment of the lens 212 in the y axis (magnification) translational and θ_{z} rotational directions may be made against the biasing of spring 248 by advancing the screw 238 and/or 243. Moving the screw 243 in the x axis direction will move the lens 212 in a θ_{z} rotational direction about the pivot point 233, to set the θ_{z} position against the biasing torque of spring 248. Moving the screw 238 in the y axis direction will move the lens 212 in the y axis direction to set the y position of the lens 212. The lens 212 will remain loaded against the guide pin 233 and tips at screws 238 and 243 during this action due to the clockwise θ_{z} bias. Adjustment of the θ_{z} angular positioning of lens 212 is accomplished first, so that the y axis adjustment is not affected thereby. The loading of the lens 212 against the locators 233, 243 will maintain the θ_{z} adjustment, while the y axis adjustment is made. Once the y axis and θ_{z} positions have both been set, the screws 261, 262 are tightened down fully to lock the lens 212 against further movement relative to carrier 214.

A clockwise moment θ_{z}M is chosen to load the lens 212 against the locators 233, 238, 243, so that standard right-hand threaded lockdown screws 261, 262 will not dislodge the lens 212 from its adjusted position during lockdown. Because the lens retainer 216 does not itself function to locate the lens 212, but only to apply a pressure in the z axis direction, it can be an inexpensive non-precision part. And, unlike the corresponding retainer 36 of the mount 20, the retainer 216 is not directly involved in the torque applying process at all. The retainer 216 can, therefore, be of much simpler construction. It may comprise, for example, a simple flat sheet of metal of no particular required shape, that can deform, preferably elastically, about the lens 212 during lockdown and, thus, clamp the lens 212 in the desired position.

Those skilled in the art to which the invention relates will appreciate that other substitutions and modifications can be made to the described embodiments without departing from the scope of the invention as described by the claims below.

## Claims

1. A device for use in an optical system having a source for projecting a beam of light along a path through a cylindrical lens of rectangular cross-section and onto a receiving medium, said device including means for positioning said cylindrical lens having a rectangular cross-section (a) translationally with respect to x and y orthogonal axes directions and (b) rotationally, against a biasing torque, about a z axis direction, said z axis being perpendicular to said x and y axes ; said device being characterized by:
a lens carrier (33; 214) having a recess (68; 228) with a bottom planar surface (98; 251) for receiving said rectangular lens, said bottom surface (98; 251) having a central optical opening (34; 215);
means (36, 88, 89; 216, 261, 262) for holding said lens in said recess (68; 228) by pressing a lens major surface against said bottom surface (98; 251); and
means (69, 72, 77; 233, 238, 243) for adjusting the position of said rectangular lens within said recess (68; 228), along two perpendicular directions in a plane parallel to said bottom surface (98; 251) and along a rotational direction about an axis perpendicular to said bottom surface (98; 251).

2. The device of claim 1 wherein said means (69, 72, 77; 233, 238, 243) for adjusting the position of said rectangular lens within said recess comprises means (69, 72; 233, 238, 243) acting directly between said lens and said carrier.

3. The device of claim 1 or 2 further characterized by: means (32, 53, 54; 32', 58', 59) for translationally positioning said lens carrier (33; 214) along an axis perpendicular to a plane defined by said bottom surface (98; 251).

4. The device of claim 3 further characterized by means (62; 62') for locking said lens carrier (33; 214) relative to said means (32, 53, 54; 32', 58', 59) for translationally positioning.

5. The device of any of the preceding claims, further characterized by a lens retainer (36, 36', 36") having a cavity (102) for receiving said lens, said cavity being axially spaced from said recess (68; 228) along said axis perpendicular to said planar surface.

6. The device of any of claims 1 to 4, further characterized by means (246, 248) for applying said biasing torque directly between said lens and said carrier (33; 214).

7. The device of any of the preceding claims, or 6 wherein said means (69, 72, 77; 233, 238, 243) for adjusting the position of said rectangular lens within said recess, includes a protuberance (69, 233) projecting into said recess (68; 228) and means (72, 77; 238, 243) for moving said lens pivotably about said protuberance.

8. The device of any of the preceding claims, wherein said means (69, 72, 77; 233, 238, 243) for adjusting the position of said rectangular lens within said recess, includes means (72, 238) for adjustably translationally positioning said lens in a first said direction in a plane parallel to said bottom planar surface (98; 251).

9. The device of claim 8 wherein said means (69, 72, 77; 233, 238, 243) for adjusting the position of said rectangular lens within said recess, includes means (77, 243) for adjustably translationally positioning said lens in a second said direction in a plane parallel to said bottom planar surface (98; 251), said first and second directions being orthogonal.

10. The device of any of the preceding claims, wherein said means (36, 88, 89; 216, 261, 262) for holding said lens in said recess (68; 228) resiliently biases said lens major surface against said bottom surface (98; 251).

## Patentansprüche

1. Vorrichtung zur Verwendung in einem optischen System mit einer Quelle zum Projizieren eines Lichtstrahls entlang einer Bahn durch eine zylindrische Linse mit rechteckigem Querschnitt auf ein Empfangsmedium, wobei die Vorrichtung Mittel aufweist, welche die einen rechteckigen Querschnitt aufweisende zylindrische Linse derart positionieren, daß diese (a) bezüglich einer sich entlang einer x- und y-Achse erstreckenden orthogonalen Richtung hin- und herbewegbar und (b) um eine senkrecht zur x- und y-Achse verlaufenden z-Achse drehbar entgegen einem Haltedrehmoment angeordnet ist, **gekennzeichnet durch**
einen Linsenträger (33; 214) mit einer eine plane Bodenfläche (98; 251) zum Aufnehmen der rechteckigen Linse aufweisenden Ausnehmung (68; 228), wobei die Bodenfläche (98; 251) mit einer mittigen optischen Öffnung (34; 215) versehen ist;
Mittel (36, 88, 89; 216, 261, 262), die die Linse durch Andrücken einer größeren Linsenfläche an die Bodenfläche (98; 251) in der Ausnehmung (68; 228) haltern; und
Mittel (69, 72, 77; 233, 238, 243), die die Position der rechteckigen Linse innerhalb der Ausnehmung (68; 228) in zwei senkrechten Richtungen in einer parallel zur Bodenfläche (98; 251) verlaufenden Ebene und in einer Drehrichtung um eine senkrecht zur Bodenfläche (98; 251) verlaufenden Achse einstellen.

2. Vorrichtung nach Anspruch 1, dadurch gekennzeichnet, daß die Mittel (69, 72, 77; 233, 238, 243) zum Einstellen der Position der rechteckigen Linse innerhalb der Ausnehmung direkt zwischen der Linse und dem Linsenträger betätigbare Mittel (69, 72; 233, 238, 243) aufweisen.

3. Vorrichtung nach Anspruch 1 oder 2, gekennzeichnet durch Mittel (32, 53, 54; 32', 58', 59), die den Linsenträger (33; 214) entlang einer senkrecht zu einer durch die Bodenfläche (98; 251) gebildeten Ebene hin- und herbewegbar positionieren.

4. Vorrichtung nach Anspruch 3, gekennzeichnet durch Mittel (62; 62'), die den Linsenträger (33; 214) relativ zu den Mitteln (32, 53, 54; 32', 58', 59) zum hin- und herbewegbaren Positionieren feststellen.

5. Vorrichtung nach einem der vorhergehenden Ansprüche, gekennzeichnet durch ein Linsenbefestigungselement (36, 36', 36"), das eine Öffnung (102) zum Aufnehmen der Linse umfaßt und von der Ausnehmung (68; 228) entlang der senkrecht zur planen Bodenfläche verlaufenden Achse axial beabstandet ist.

6. Vorrichtung nach einem der Ansprüche 1 bis 4, gekennzeichnet durch Mittel (246, 248) zum Aufbringen des Haltedrehmoments unmittelbar zwischen Linse und Linsenträger (33; 214).

7. Vorrichtung nach einem der vorhergehenden Ansprüche oder Anspruch 6, dadurch gekennzeichnet, daß die Mittel (69, 72, 77; 233; 238, 243) zum Einstellen der Position der rechteckigen Linse innerhalb der Ausnehmung einen in die Ausnehmung (68; 228) ragenden Vorsprung (69, 233) sowie Mittel (72, 77; 238; 243) zum schwenkbaren Bewegen der Linse um den Vorsprung aufweisen.

8. Vorrichtung nach einem der vorhergehenden Ansprüche, dadurch gekennzeichnet, daß die Mittel (69, 72, 77; 233, 238, 243) zum Einstellen der Position der rechteckigen Linse innerhalb der Ausnehmung Mittel (72, 238) zum veränderbaren Positionieren der Linse durch Hin- und Herbewegen in einer ersten Richtung umfaßt, die sich in einer parallel zur planen Bodenfläche (98; 251) verlaufenden Ebene erstreckt.

9. Vorrichtung nach Anspruch 8, dadurch gekennzeichnet, daß die Mittel (69, 72, 77; 233, 238, 243) zum Einstellen der Position der rechteckigen Linse innerhalb der Ausnehmung Mittel (72, 238) zum veränderbaren Positionieren der Linse durch Hin- und Herbewegen in einer zweiten Richtung umfaßt, die sich in einer parallel zur planen Bodenfläche (98; 251) verlaufenden Ebene erstreckt, wobei die erste und zweite Richtung orthogonal zueinander verlaufen.

10. Vorrichtung nach einem der vorhergehenden Ansprüche, dadurch gekennzeichnet, daß die Mittel (36, 88, 89; 216, 261, 262) zum Haltern der Linse in der Ausnehmung (68; 228) die Hauptfläche der Linse federnd gegen die Bodenfläche (98; 251) vorspannen.

## Revendications

1. Dispositif destiné à être utilisé dans un système optique comportant une source pour projeter, sur un support récepteur, un faisceau de lumière suivant un trajet au travers d'une lentille cylindrique de section transversale rectangulaire, ledit dispositif comprenant des moyens pour positionner ladite lentille cylindrique, présentant une section transversale rectangulaire, (a) en translation par rapport aux directions des axes orthogonaux x et y et (b) en rotation, en fonction d'un couple de sollicitation, autour de la direction de l'axe z, ledit axe z étant perpendiculaire auxdits axes x et y, ledit dispositif étant caractérisé par :
une monture de lentille (33, 214) présentant un évidement (68, 228) avec une surface de fond plane (98, 251) destinée à recevoir ladite lentille rectangulaire, ladite surface de fond (98, 251) présentant une ouverture optique centrale (34, 215),
des moyens (36, 88, 89 ; 216, 261, 262) destinés à maintenir ladite lentille dans ledit évidement (68 ; 228) en appuyant une surface principale de lentille contre ladite surface de fond (98, 251), et
des moyens (69, 72, 77 ; 233, 238, 243) destinés à régler la position de ladite lentille rectangulaire à l'intérieur dudit évidement (68, 228), suivant deux directions perpendiculaires dans un plan parallèle à ladite surface de fond (98, 251) et suivant un sens de rotation autour d'un axe perpendiculaire à ladite surface de fond (98, 251).

2. Dispositif selon la revendication 1, dans lequel lesdits moyens (69, 72, 77 ; 233, 238, 243) destinés à régler la position de ladite lentille rectangulaire à l'intérieur dudit évidement, comprennent des moyens (69, 72 ; 233, 238, 243) agissant directement entre ladite lentille et ladite monture.

3. Dispositif selon la revendication 1 ou 2, caractérisé en outre par :
des moyens (32, 53, 54 ; 32', 58', 59) destinés à positionner en translation ladite monture de lentille (33, 214) suivant un axe perpendiculaire à un plan défini par ladite surface de fond (98, 251).

4. Dispositif selon la revendication 3 caractérisé en outre par des moyens (62, 62') destinés à verrouiller ladite monture de lentille (33, 214) par rapport auxdits moyens (32, 53, 54 ; 32', 58', 59) destinés au positionnement en translation.

5. Dispositif selon l'une quelconque des revendications précédentes, caractérisé en outre par un dispositif de maintien de lentille (36, 36', 36") comportant une cavité (102) destinée à recevoir ladite lentille, ladite cavité étant espacée axialement dudit évidement (68, 228) suivant ledit axe perpendiculaire à ladite surface plane.

6. Dispositif selon l'une quelconque des revendications 1 à 4, caractérisé en outre par des moyens (246, 248) destinés à appliquer ledit couple de sollicitation directement entre ladite lentille et ladite monture (33, 214).

7. Dispositif selon l'une quelconque des revendications précédentes, ou la revendication 6, dans lequel lesdits moyens (69, 72, 77 ; 233, 238, 243) destinés à régler la position de ladite lentille rectangulaire à l'intérieur dudit évidement, comprennent une protubérance (69, 233) saillant dans ledit évidement (68, 228) et des moyens (72, 77 ; 238, 243) destinés à déplacer ladite lentille de façon pivotante autour de ladite protubérance.

8. Dispositif selon l'une quelconque des revendications précédentes, dans lequel lesdits moyens (69, 72, 77 ; 233, 238, 243) destinés à régler la position de ladite lentille rectangulaire à l'intérieur dudit évidement, comprennent des moyens (72, 238) pour positionner en translation, de façon réglable, ladite lentille suivant une première dite direction dans un plan parallèle à ladite surface de fond plane (98, 251).

9. Dispositif selon la revendication 8, dans lequel lesdits moyens (69, 72, 77 ; 233, 238, 243) destinés à régler la position de ladite lentille rectangulaire à l'intérieur dudit évidement, comprennent des moyens (77, 243) destinés à positionner en translation, de façon réglable, ladite lentille suivant une seconde dite direction dans un plan parallèle à ladite surface de fond plane (98, 251), lesdites première et seconde directions étant orthogonales.

10. Dispositif selon l'une quelconque des revendications précédentes, dans lequel lesdits moyens (36, 88, 89 ; 216, 261, 262) destinés à maintenir ladite lentille dans ledit évidement (68, 228) sollicitent de façon élastique ladite surface principale de lentille contre ladite surface de fond (98, 251).
